# FASCICULE DE BREVET EUROPEEN

(11) **EP 3 167 706 B1**
(45) Date de publication et mention de la délivrance du brevet: **06.02.2019**
(21) Numéro de dépôt: 15003254.8
(22) Date de dépôt: 16.11.2015
(51) Int. Cl.: A01G 17/14, E04H 17/12

(54) **PIQUET DE PALISSAGE ET ENSEMBLE DE PALISSAGE ASSOCIÉ**
SPALIERPFAHL UND ENTSPRECHENDE SPALIERANORDNUNG
TRELLIS STAKE AND ASSOCIATED TRELLIS ASSEMBLY

(43) Date de publication de la demande: 17.05.2017
(73) Titulaire: C.M.V Maderas tratadas S.L, 31570 San Adrian (ES)
(72) Inventeur: Martinez Velasco, Carmelo Santiago, 31570 San Adrian (ES)
(74) Mandataire: Delaveau, Sophie

(56) Documents cités:
- WO-A1-2008/154676
- US-A1- 2010 200 826
- US-B1- 6 454 244

## Description

L'invention concerne principalement un piquet destiné aux opérations de palissage, et concerne également un ensemble de palissage comprenant au moins un tel piquet.

Le palissage est une technique agricole par laquelle les branches de plantes sont attachées à des fils horizontaux afin d'optimiser l'exposition au soleil du feuillage en augmentant la qualité et les rendements de production. La technique du palissage est largement utilisée dans le domaine viticole.

On distingue les fils porteurs qui supportent le poids des plantes, qui sont situés au plus près du sol et qui, après le premier positionnement des plantes, ne sont généralement pas voués à être déplacés, et les fils releveurs situés au-dessus du ou des fils porteurs qui sont au contraire déplacés régulièrement au cours de la croissance de la plante pour l'accompagner dans son développement.

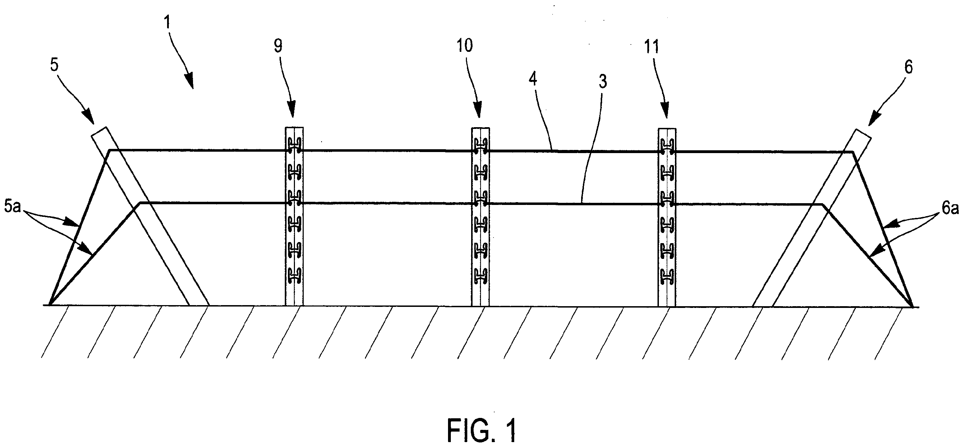

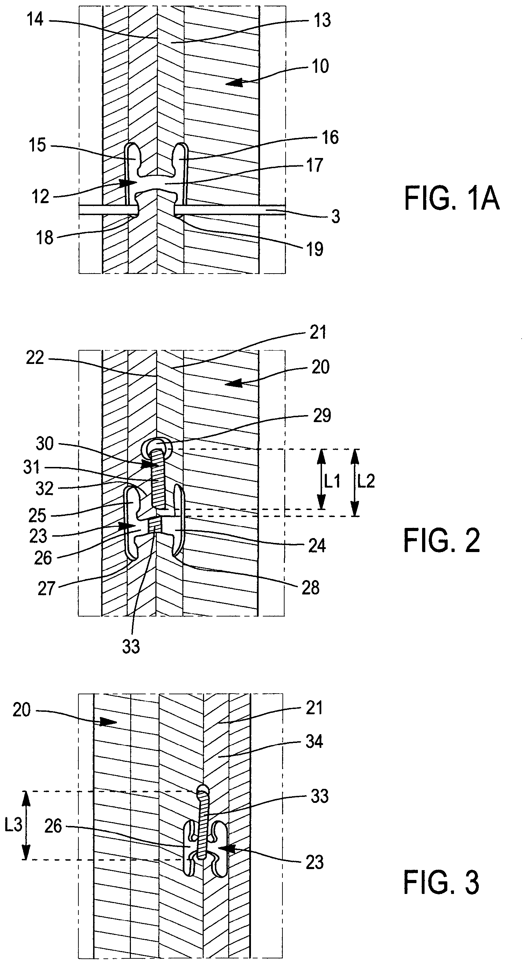

Comme illustré sur la figure 1 qui représente schématiquement un ensemble de palissage 1 de l'art antérieur, un fil porteur 2 et deux fils releveurs 3,4 sont tendus horizontalement les uns au-dessus des autres en s'étendant depuis des piquets dits de tête 5,6.

Les piquets de têtes 5,6 sont en bois ou en acier galvanisé, implantés dans le sol en position inclinée et reliés à une amarre enfoncée dans le sol (non visible sur la figure 1) par des fils d'amarre 5a,6a. Le fil porteur 2 et les fils releveur 3,4 sont attachés aux piquets de tête 5,6 soit par une coulisse, soit en étant torsadés ou tendus par un tendeur avant d'être enroulés autour du poteau de tête 5a,6a en passant éventuellement à travers un perçage réalisé sur ces piquets de tête 5a,6a.

Entre les piquets de tête 5,6 sont répartis une pluralité de piquets de rangs ou intermédiaires 9,10,11 sur lesquels sont fixés les fils porteur 2 et releveur 3,4 et qui reprennent la charge de ces fils 2,3,4 sur toute leur longueur.

Il est avantageux de prévoir la solidarisation amovible des fils au moins releveurs aux piquets intermédiaires afin de faciliter le déplacement de ces fils sur les piquets au cours de la croissance des plantes.

Il est pour ce faire connu de réaliser sur chacun des piquets intermédiaires 9,10,11, et éventuellement également sur les piquets de tête 5,6, des découpes de réception 12 des fils 2,3,4 dans lesquels les fils 2,3,4 sont facilement introduits et desquels les fils 2,3,4 sont facilement retirés.

On se réfère à la figure 2 qui est vue agrandie de la partie cerclée de la figure 1 pour décrire les moyens de solidarisation amovibles des fils aux piquets de palissage de l'art antérieur.

Chaque piquet 10 est fait d'une bande généralement métallique en acier galvanisé qui est pliée sur elle-même pour renforcer son inertie et augmenter sa résistance à la compression latérale. Le piquet 10 présente ainsi au moins un bossage longitudinal 13 réalisé autour d'une ligne de pliage 14, le bossage s'étendant sur toute la hauteur du piquet 10.

La découpe de réception 12, réalisée avant pliage de la bande métallique, est en forme de H en présentant deux encoches longitudinales 15,16 symétriquement disposées sur le bossage longitudinal 13 de part et d'autre de la ligne de pliage 14, et reliées entre elles par une encoche traverse 17.

La largeur de l'encoche traverse 17 est au moins égale à l'épaisseur du fil 3 de façon à pouvoir introduire le fil 13 dans l'encoche traverse 17 avant de laisser reposer le fil 3 sur les bord inférieurs respectifs 18,19 des deux encoches longitudinales 15,16. Ces bords inférieurs 18,19 sont de préférence alignés horizontalement de façon que le fil 3 en appui soit lui-même horizontal. La partie supérieure des deux encoches longitudinales 15,16 ne présente aucune fonctionnalité particulière mais est adaptée aux outils de réalisation de la découpe de réception 12.

En outre, ce type de piquet de palissage est connu de l'état de l'art antérieur, notamment dans le document US 6 454 244 B1.

Si ce système permet l'insertion et le retrait aisé du fil 3 de la découpe de réception 12, il existe des risques de retrait incontrôlé du fil 3 de la découpe de réception 12 sous l'effet de la tension des branches reposant sur ces fils ou des conditions climatiques et en particulier du vent. Si un fil se désolidarise de son piquet, il en résulte alors une diminution de l'efficacité du système et la nécessité de venir replacer le fil dans la découpe de réception.

Dans le domaine des poteaux de clôture, les documents WO 2008/154676 A1 et US 2010/0200826 A1 présentent des solutions techniques différentes de l'objet de la présente invention pour maintenir un fil dans une entaille.

L'invention vise ainsi un piquet de palissage et un ensemble pour palissage évitant le retrait inopiné des fils porteurs ou releveurs des découpes de réception ménagées sur les piquets.

A cet effet, le piquet de palissage de l'invention est fait d'une bande pliée autour d'au moins une ligne de pliage en formant au moins un bossage longitudinal, sur lequel bossage est ménagé au moins une découpe de réception d'un fil porteur ou releveur qui comporte deux encoches longitudinales reliées entre elles par une encoche traverse, les deux encoches longitudinales étant disposées de part et d'autre de la ligne de pliage et comportant chacune un bord inférieur d'appui du fil, et est essentiellement caractérisé en ce qu'un orifice traversant est ménagé sur le bossage longitudinal au-dessus de la découpe de réception du fil, et ce qu'une goupille faite d'une tige repliée sur elle-même est positionnée dans l'orifice traversant en présentant d'une part une tête d'accroche située sur la face avant bosselée du piquet et dont la longueur est inférieure à la distance entre l'orifice traversant et l'encoche traverse, et d'autre part une tige de verrouillage située sur la face arrière bosselée du piquet et qui s'étend longitudinalement au-delà de l'encoche traverse en obturant la dite encoche traverse du côté de la face arrière bosselée, la goupille étant apte à être actionnée en pivotement autour d'un axe qui est perpendiculaire à l'axe principal du bossage longitudinal et au fil qui est destiné à être introduit dans la découpe de réception, entre une première position de verrouillage dans laquelle la tige de verrouillage obture l'encoche traverse, et une position de déverrouillage dans laquelle la tige de verrouillage n'obture pas l'encoche traverse en autorisant le retrait du fil depuis sa position d'utilisation en appui sur les bords inférieurs respectifs des deux encoches longitudinales de la découpe de réception.

Le piquet de l'invention peut également comporter les caractéristiques optionnelles suivantes considérées isolément ou selon toutes les combinaisons techniques possibles :
- la goupille qui est positionnée à travers l'orifice traversant présente un jeu avec les faces avant et arrière du bossage longitudinal qui est tel que :
   o à l'insertion du fil dans la découpe de réception par passage du dit fil dans l'encoche traverse du côté de la face avant bosselée du piquet, l'appui du fil sur la tige de verrouillage de la goupille provoque l'écartement-pivotement de ladite tige de verrouillage permettant le passage du fil dans l'encoche traverse, et qui est tel que :
      o le retrait du fil de la découpe de réception nécessite le pivotement manuel de la goupille pour permettre le passage du fil à travers l'encoche traverse de la découpe de réception.
- la découpe de réception est en forme de H.
- l'orifice traversant est ménagé sur la ligne de pliage du bossage longitudinal.
- les deux encoches longitudinales de la découpe de réception sont symétriquement disposées de part et d'autre de la ligne de pliage du bossage longitudinal.
- le piquet comporte une pluralité de découpes de réception surmontées chacune par un orifice traversant, et au moins une goupille est positionnée dans un orifice traversant.
- le piquet est réalisé en acier galvanisé, les goupilles étant également réalisées en acier galvanisé.

L'invention porte également sur un ensemble de palissage qui est essentiellement caractérisé en ce qu'il comprend deux piquets de têtes et une pluralité de piquets intermédiaires sur lesquels piquets sont montés au moins un fil porteur ou releveur, et en ce que chaque piquet intermédiaire est tel que précédemment décrit.

Avantageusement, le dit ensemble comporte une pluralité de fils releveurs.

D'autres caractéristiques et avantages de l'invention ressortiront clairement de la description qui en est donnée ci-dessous, à titre indicatif et nullement limitatif, en référence aux figures annexées parmi lesquelles :
- la figure 1 déjà décrite est une représentation schématique d'un ensemble de palissage de l'art antérieur,
- la figure 1a déjà décrite est une vue agrandie de la partie cerclée de la figure 1 illustrant une découpe de réception d'un fil releveur ménagée sur un piquet intermédiaire selon l'art antérieur,
- la figure 2 est une vue schématique depuis la face avant bosselée d'une partie d'un piquet de l'invention comportant une découpe de réception d'un fil releveur ou porteur et une goupille en position dans un orifice traversant représentée dans sa position de verrouillage,
- la figure 3 est la même représentation que celle de la figure 2 mais prise depuis la face arrière bosselée du piquet,
- la figure 4 est la même vue que celle de la figure 3 mais sur laquelle la goupille est représentée dans sa position pivotée de déverrouillage,

Les figures 5 à 9 représentent les étapes successives d'insertion et de retrait d'un fil releveur dans et depuis la découpe de réception ménagée sur le piquet.

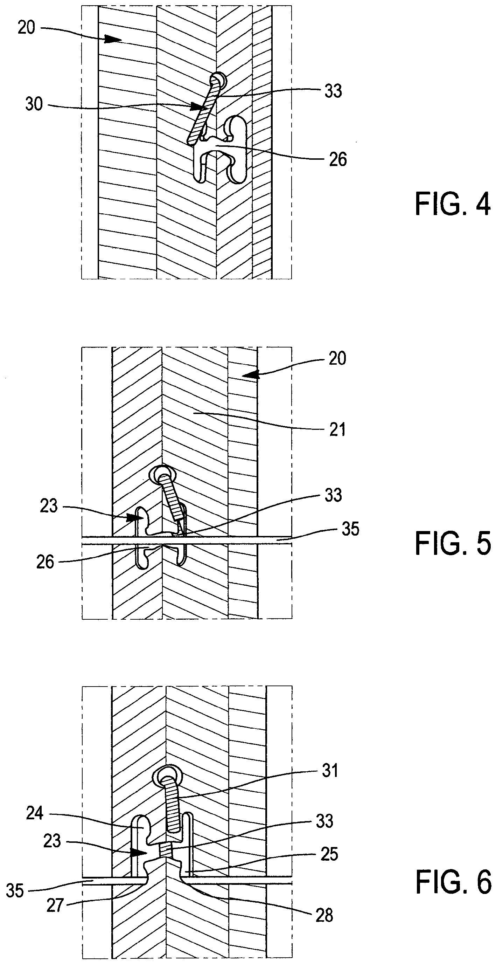

- la figure 5 est une vue schématique depuis la face avant bosselée du piquet et illustre l'introduction du fil dans la découpe de réception et le déverrouillage concomitant de la goupille,
- la figure 6 est la même vue que celle de la figure 5 sur laquelle le fil releveur est représenté en appui sur les bords inférieurs de la découpe de réception,

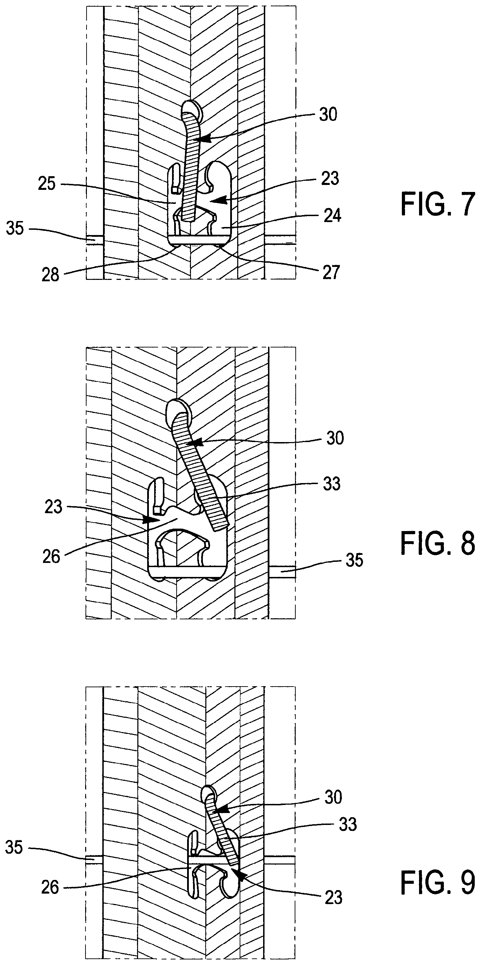

- la figure 7 illustre également la position dans laquelle le fil releveur est en appui sur les bords inférieurs de la découpe de réception mais prise depuis la face arrière bosselée du piquet,
- la figure 8 illustre le déverrouillage manuel de la goupille en vue du retrait du fil releveur pris depuis la face arrière bosselée du piquet, le fil étant toujours en position sur les bords inférieurs de la découpe de réception,
- la figure 9 illustre, depuis la face arrière bosselée du piquet, le retrait du fil releveur de la découpe de réception pendant que la goupille est maintenue dans sa position de déverrouillage, et

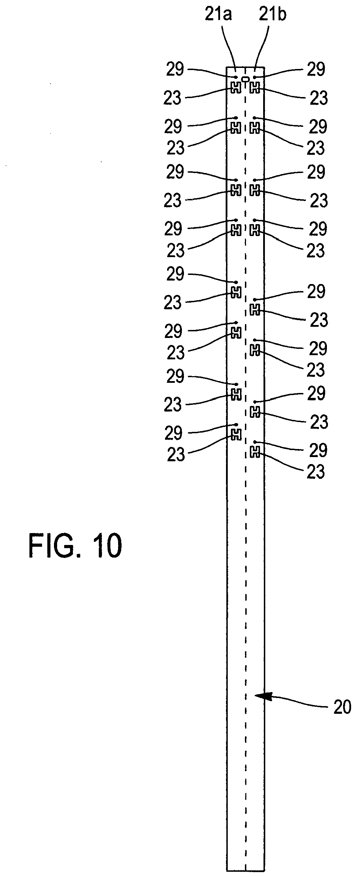

- la figure 10 est une représentation schématique d'un piquet de l'invention selon une variante dans laquelle le piquet comporte deux bossages longitudinaux.

En référence aux figures 2 et 3, le piquet de l'invention 20 est, comme dans l'art antérieur, fait d'une bande métallique en acier galvanisé qui est pliée sur elle-même pour renforcer son inertie et augmenter sa résistance à la compression latérale. Le piquet 20 présente ainsi au moins un bossage longitudinal 21 réalisé autour d'une ligne de pliage 22, le bossage 21 s'étendant sur toute la hauteur du piquet 20.

Comme dans l'art antérieur également, le piquet de l'invention 20 comporte au moins une découpe de réception 23 d'un fil porteur qui est réalisée avant pliage de la bande métallique, est en forme de H en présentant deux encoches longitudinales 24,25 symétriquement disposées sur le bossage longitudinal 21 de part et d'autre de la ligne de pliage 22, lesquelles encoches longitudinales 24,25 sont reliées entre elles par une encoche traverse 26.

La largeur de l'encoche traverse 26 est au moins égale à l'épaisseur du fil destiné à être fixé sur le piquet 20 de façon à pouvoir introduire le fil dans l'encoche traverse 26 avant de laisser reposer le fil sur les bord inférieurs respectifs 27,28 des deux encoches longitudinales 24,25. Ces bords inférieurs 27,28 sont de préférence alignés horizontalement de façon que le fil en appui soit lui-même horizontal. La partie supérieure des deux encoches longitudinales 24,25 ne présente aucune fonctionnalité particulière mais est adaptée aux outils de réalisation de la découpe de réception 23.

Selon l'invention, un orifice traversant 29 est ménagé sur la ligne de pliage 22 au-dessus de la découpe de réception 23. Une goupille 30 faite d'une tige pliée sur elle-même repose sur la tranche inférieure de l'orifice traversant 29 après avoir été introduite dans ledit orifice traversant 29. Dans cette position et en référence à la figure 2, la goupille 30 présente une tête d'accroche 31 qui s'étend contre la face avant 32 du bossage longitudinal 21 depuis l'orifice traversant 29. La longueur L1 de la tête d'accroche 21 est inférieure à la distance L2 entre l'orifice traversant 29 et l'encoche traverse 26 de façon à ne pas obturer l'encoche traverse 26 du coté de la face avant 32 du bossage longitudinal 21 et permettre l'insertion du fil comme il sera décrit plus loin.

En référence à la figure 3, la goupille 30 présente également une tige de verrouillage 33 qui s'étend contre la face arrière 34 du bossage longitudinal 21. La longueur L3 de la tige de verrouillage 33 est telle que, contrairement à la tête d'accroche 31, la tige de verrouillage 33 s'étend sur toute la hauteur de l'encoche traverse 26 en obturant cette encoche traverse 26 du côté de la face arrière 24 du bossage longitudinal 21 en assurant ainsi le verrouillage du système et en empêchant le fil releveur en position dans la découpe de réception de se désolidariser du piquet.

Comme illustré sur la figure 4, la goupille 30 peut ainsi être actionnée manuellement en position de déverrouillage en poussant la tête d'accroche 31 sur le côté ce dont il résulte le pivotement concomitant de la tige de verrouillage 33 qui n'obture plus l'encoche traverse 26 pour permettre le retrait du fil comme il sera vu plus loin.

En outre, le pliage de la goupille 30 est réalisé de façon que la goupille 30 présente un jeu avec les faces avant 32 et arrière 34 du le bossage longitudinal 21. Ce jeu permet à la fois de faciliter le pivotement manuel de la goupille 30 sans que cette dernière ne frotte contre les faces avant 32 et arrière 34 du bossage longitudinal 21, et permet également d'introduire le fil releveur dans la découpe de réception 23 sans qu'il ne soit nécessaire de faire pivoter manuellement la goupille 30.

Plus précisément et en référence à la figure 5, l'insertion du fil releveur 35 dans la découpe de réception 23 s'effectue en présentant le fil 35 au niveau de l'encoche traverse 26 et en appuyant contre la tige de verrouillage 33 de la goupille 30. Le jeu ménagé entre la goupille 30 et le bossage longitudinal 21 engendre l'écartement et le pivotement automatique de la tige de verrouillage 33 qui libère l'encoche traverse et permet d'introduire le fil 35 dans la découpe de réception 23.

A l'inverse, ce jeu est suffisamment petit pour empêcher au fil 33 en position dans la découpe de réception 23 de sortir de cette découpe 23 sans que la goupille 30 ne soit actionnée manuellement en pivotement. Il n'est pas possible de décrire ce jeu autrement que par le résultat qu'il engendre, c'est-à-dire l'écartement nécessaire pour l'introduction automatique du fil 35 dans la découpe de réception 23 mais suffisamment faible pour assurer l'empêchement du retrait du fil 35 en position dans la découpe de réception 23. L'homme du métier saura effectuer le pliage de la tige formant la goupille 30 de façon à assurer cette double fonction de la goupille 30.

En référence aux figures 6 et 7, le fil releveur 35 a été introduit dans la découpe de réception 23 et repose sur les bords inférieurs respectifs 27,28 des deux encoches longitudinales 24,25 de la découpe de réception 23. Le fil releveur 35 reste dans cette position pendant plusieurs semaines ou mois avant qu'il ne soit nécessaire de le retirer pour, par exemple, l'introduire dans une découpe de réception 23 ménagée plus haut sur le piquet 20.

Pour retirer le fil releveur 35 et comme illustré sur les figures 8 et 9, il suffit de pousser manuellement la tête d'accroche (non visible sur ces figures puisque située du côté de la face avant 32 du bossage longitudinal 21) de la goupille 30, ce qui provoque le pivotement de la tige de verrouillage 33 qui n'obture plus l'encoche traverse 26 et permet au fil releveur 35 d'être retiré de la découpe de réception 23.

Le piquet de l'invention 20 comporte une pluralité de découpes de réception 20 associées chacune à un orifice traversant 29 pour pouvoir maintenir plusieurs fils releveurs ou porteurs et assurer leur changement de hauteur. Le nombre de goupilles 30 est quant à lui adapté aux découpes de réception 23 qui reçoivent un fil. La goupille 30 pouvant être facilement retirées de l'orifice traversant 29 qui est conçu suffisamment grand pour autoriser la mise en place et le retrait de la goupille 30, on peut imaginer que le passage d'un fil releveur 35 depuis une première découpe de réception 23 vers une seconde découpe de réception ne comportant pas de goupille, s'accompagnera également du retrait de la goupille 30 de l'orifice traversant 29 associé à la première découpe de réception 23 et de la mise en place de la goupille 30 dans l'orifice traversant associé à la seconde découpe de réception.

On peut alternativement prévoir qu'une goupille est montée dans chaque orifice traversant, évitant alors le retrait et la remise en place des goupilles lorsque le fil est changé de position.

Le nombre de découpes de réception ménagé sur un piquet est adapté à l'application et aux besoins de l'ensemble de palissage.

L'invention porte également sur un ensemble de palissage dont la configuration correspond à celle décrite en référence à la figure 1, chaque piquet intermédiaire étant pourvu d'un unique bossage longitudinal et d'une pluralités de découpes de réception, d'orifices traversant associés et le cas échéant de goupilles introduites dans tous ou certains orifice traversant.

Alternativement et comme représenté sur la figure 10, le piquet de l'invention 20 comporte deux bossages longitudinaux 21a,21b et ainsi deux séries verticales de découpes de réception 23 et d'orifices associés 29, les découpes 23 et orifices associés 29 pouvant être alignés horizontalement ou décalés. On assure ainsi une pluralité de positions possibles pour les fils releveurs ou porteurs.

Les piquets de l'invention 20 n'engendrent pas de modification importante dans la conception puisqu'il est possible d'utiliser les outils existants de réalisation des découpes de réception 23 en ajoutant une étape de réalisation des orifices 29 dans lesquels, le cas échéant, est montée une goupille 30.

## Revendications

1. Piquet de palissage (20) fait d'une bande pilée autour d'au moins une ligne de pliage (22) en formant au moins un bossage longitudinal (21), sur lequel bossage est ménagé au moins une découpe de réception (23) d'un fil porteur ou releveur qui comporte deux encoches longitudinales (24, 25) reliées entre elles par une encoche traverse (26), les deux encoches longitudinales étant disposées de part et d'autre de la ligne de pilage et comportant chacune un bord inférieur d'appui (27, 28) du fil, **caractérisé en ce qu'**un orifice traversant (29) est ménagé sur le bossage longitudinal (21) au-dessus de la découpe de réception du fil (23), et ce qu'une goupille (30) faite d'une tige repliée sur elle-même est positionnée dans l'orifice traversant (29) en présentant d'une part une tête d'accroche (31) située sur la face avant bosselée (32) du piquet (20) et dont la longueur (L1) est inférieure à la distance (L2) entre l'orifice traversant (29) et l'encoche traverse (26), et d'autre part une tige de verrouillage (33) située sur la face arrière bosselée (34) du piquet (20) et qui s'étend longitudinalement au-delà de l'encoche traverse (26) en obturant la dite encoche traverse (26) du côté de la face arrière bosselée (34), la goupille (30) étant apte à être actionnée en pivotement autour d'un axe qui est perpendiculaire à l'axe principal du bossage longitudinal et au fil qui est destiné à être introduit dans la découpe de réception, entre une première position de verrouillage dans laquelle la tige de verrouillage (33) obture l'encoche traverse (26), et une position de déverrouillage dans laquelle la tige de verrouillage (33) n'obture pas l'encoche traverse (26) en autorisant le retrait du fil (35) depuis sa position d'utilisation en appui sur les bords inférieurs respectifs (27,28) des deux encoches longitudinales (24,25) de la découpe de réception (23).

2. Piquet de palissage selon la revendication 1, **caractérisé en ce que** la goupille (30) qui est positionnée à travers l'orifice traversant (29) présente un jeu avec les faces avant (32) et arrière (34) du bossage longitudinal (21) qui est tel que :
- à l'insertion du fil (35) dans la découpe de réception (23) par passage du dit fil (35) dans l'encoche traverse (26) du côté de la face avant bosselée (32) du piquet (20), l'appui du fil (35) sur la tige de verrouillage (33) de la goupille (30) provoque l'écartement-pivotement de ladite tige de verrouillage (33) permettant le passage du fil (35) dans l'encoche traverse (26), et qui est tel que :
- le retrait du fil (35) de la découpe de réception (23) nécessite le pivotement manuel de la goupille (30) pour permettre le passage du fil (35) à travers l'encoche traverse (26) de la découpe de réception (23).

3. Piquet de palissage selon l'une quelconque des revendications 1 et 2, **caractérisé en ce que** la découpe de réception (23) est en forme de H.

4. Piquet de palissage selon l'une quelconque des revendications précédentes, **caractérisé en ce que** l'orifice traversant (29) est ménagé sur la ligne de pliage (22) du bossage longitudinal (21).

5. Piquet de palissage selon l'une quelconque des revendications précédentes, **caractérisé en ce que** les deux encoches longitudinales (24,25) de la découpe de réception (23) sont symétriquement disposées de part et d'autre de la ligne de pliage (22) du bossage longitudinal (21).

6. Piquet de palissage selon l'une quelconque des revendications précédentes, **caractérisé en ce qu'**il comporte une pluralité de découpes de réception (23) surmontées chacune par un orifice traversant (29), et **en ce qu'**au moins une goupille (30) est positionnée dans un orifice traversant (29).

7. Piquet de palissage selon l'une quelconque des revendications précédentes, **caractérisé en ce qu'**il est réalisé en acier galvanisé, les goupilles étant également réalisées en acier galvanisé.

8. Ensemble pour palissage, **caractérisé en ce qu'**il comprend deux piquets de têtes (5,6) et une pluralité de piquets Intermédiaires (20) sur lesquels piquets (5,6,20) sont montés au moins un fil porteur ou releveur (35), et **en ce que** chaque piquet intermédiaire (20) est selon l'une quelconque des revendications 1 à 7.

9. Ensemble pour le palissage selon la revendication 8, **caractérisé en ce qu'**il une pluralité de fils releveur (35).

## Patentansprüche

1. Spalierpfahl (20), gebildet von einem um mindestens eine Faltlinie (22) bei Bildung von mindestens einem länglichen Vorsprung (21) gefaltetem Band, wobei auf dem Vorsprung mindestens ein Empfangsausschnitt (23) eines tragenden oder hebenden Drahtes eingearbeitet ist, der zwei längliche Kerben (24, 25) aufweist, die untereinander durch eine Querkerbe (26) verbunden sind, wobei die zwei länglichen Kerben beiderseits der Faltlinie angeordnet sind und jede einen unteren Stützrand (27, 28) des Drahtes aufweist, **dadurch gekennzeichnet, dass** eine Durchgangsöffnung (29) auf dem länglichen Vorsprung (21) oberhalb des Empfangsausschnitts des Drahtes (23) ausgebildet ist und dass ein Bolzen (30) aus einem um sich selbst gebogenen Stift in der Durchgangsöffnung (29) positioniert ist und dabei zum einen Klammerkopf (31), der sich auf der vorderen Vorsprungsfläche (32) des Pfahls (20) befindet und dessen Länge (L1) kleiner als der Abstand (L2) zwischen der Durchgangsöffnung (29) und der Querkerbe (26) ist, und zum anderen einen Verriegelungsstift (33), der sich auf der hinteren Vorsprungfläche (34) des Pfahls (20) befindet und der sich längs über die Querkerbe (26) hinaus erstreckt und dabei die Querkerbe (26) auf der Seite der hinteren Vorsprungfläche (34) verdeckt, aufweist, wobei der Bolzen (30) um eine Achse, die senkrecht zu der Hauptachse des Vorsprungs und zu dem Draht, der zur Einführung in den Empfangsausschnitt bestimmt ist, zwischen einer ersten Verriegelungsposition, in welcher der Verriegelungsstift (33) die Querkerbe (26) verdeckt, und einer Entriegelungsposition, in welcher der Verriegelungsstift (33) die Querkerbe (26) nicht verdeckt, indem er das Entfernen des Drahtes (35) aus seiner Verwendungsposition in Abstützung auf den jeweiligen unteren Rändern (27, 28) der zwei länglichen Kerben (24, 25) des Empfangsausschnitts (23) gestattet, schwenkend betätigbar ist.

2. Spalierpfahl nach Anspruch 1, **dadurch gekennzeichnet, dass** der Bolzen (30), der durch die Durchgangsöffnung (29) positioniert ist, ein Spiel mit der vorderen (32) und hinteren (34) Fläche des länglichen Vorsprungs (21) aufweist, das derart ist, dass:
- beim Einsetzen des Drahtes (35) in den Empfangsausschnitt (23) mittels Durchgang des Drahtes (35) in der Querkerbe (26) von der vorderen Vorsprungsfläche (32) des Pfahls (20) die Abstützung des Drahtes (35) auf dem Verriegelungsstift (33) des Bolzens (30) das Abspreizen-Schwenken des Verriegelungsstifts (33) bewirkt, wodurch der Durchgang des Drahtes (35) in der Querkerbe (26) gestattet wird, und derart, dass:
- für das Entfernen des Drahtes (35) aus dem Empfangsausschnitt (23) das manuelle Schwenken des Bolzens (30) notwendig ist, um den Durchgang des Drahtes (35) durch die Querkerbe (26) des Empfangsausschnitts (23) zu gestatten.

3. Spalierpfahl nach einem der Ansprüche 1 und 2, **dadurch gekennzeichnet, dass** der Empfangsausschnitts (23) H-förmig ist.

4. Spalierpfahl nach einem der vorangehenden Ansprüche, **dadurch gekennzeichnet, dass** die Durchgangsöffnung (29) auf der Faltlinie (22) des länglichen Vorsprungs (21) ausgebildet ist.

5. Spalierpfahl nach einem der vorangehenden Ansprüche, **dadurch gekennzeichnet, dass** die zwei länglichen Kerben (24, 25) des Empfangsausschnitts (23) beiderseits der Faltlinie (22) des länglichen Vorsprungs (21) symmetrisch angeordnet sind.

6. Spalierpfahl nach einem der vorangehenden Ansprüche, **dadurch gekennzeichnet, dass** er eine Vielzahl von Empfangsausschnitten (23) aufweist, über denen sich jeweils eine Durchgangsöffnung (29) befindet, und dass mindestens ein Bolzen (30) in einer Durchgangsöffnung (29) positioniert ist.

7. Spalierpfahl nach einem der vorangehenden Ansprüche, **dadurch gekennzeichnet, dass** er aus galvanisiertem Stahl hergestellt ist, wobei die Bolzen ebenfalls galvanisiertem Stahl hergestellt sind.

8. Spalieranordnung, **dadurch gekennzeichnet, dass** sie zwei Kopfpfähle (5, 6) und eine Vielzahl von Verbindungspfählen (20) umfasst, wobei auf diesen Pfählen (5, 6, 20) mindestens ein tragender oder hebender Draht (35) angebracht sind und dass jeder Verbindungspfahl (20) nach einem der Ansprüche 1 bis 7 ist.

9. Spalieranordnung nach Anspruch 8, **dadurch gekennzeichnet, dass** sie eine Vielzahl von hebenden Drähten (35) umfasst.

## Claims

1. A palisade post (20) made of a tape folded about at least one folding line (22) by forming a longitudinal boss (21), boss on which at least one reception cutout (23) is provided for receiving a load-bearing or a load-lifting wire which includes two longitudinal notches (24, 25) connected to each other by a transverse notch (26), both longitudinal notches being disposed on either side of the folding line and each including a lower bearing edge (27, 28) of the wire, **characterised in that** a through port (29) is provided on the longitudinal boss (21) above the wire receiving cutout (23), and **in that** a pin (30) made of a rod folded on itself is positioned in the through port (29) by having on the one hand an anchoring head (31) located on the bossed front face (32) of the post (20) and the length (L1) of which is lower than the distance (L2) between the through port (29) and the transverse notch (26), and on the other hand a locking rod (33) located on the bossed rear face (34) of the post (20) and which extends longitudinally beyond the transverse notch (26) by sealing said transverse notch (26) on the side of the bossed rear face (34), the pin (30) being able to be pivotably actuated about an axis which is perpendicular to the main axis of the longitudinal boss and to the wire which is intended to be introduced in the receiving cutout, between a first locking position in which the locking rod (33) seals the transverse notch (26), and an unlocking position in which the locking rod (33) does not seal the transverse notch (26) by allowing withdrawal of the wire (35) from its position of use bearing on the respective lower edges (27, 28) of both longitudinal notches (24, 25) of the receiving cutout (23).

2. The palisade post according to claim 1, **characterised in that** the pin (30) which is positioned through the through port (29) has a clearance with the front (32) and rear (34) faces of the longitudinal boss (21) which is such that:
- upon inserting the wire (35) into the receiving cutout (23) by passing said wire (35) through the transverse notch (26) on the side of the bossed front face (32) of the post (20), the wire (35) bearing on the locking rod (33) of the pin (30) causes said locking rod (33) to be moved away-pivoted enabling the wire (35) to pass through the transverse notch (26), and which is such that:
- the withdrawal of the wire (35) from the receiving cutout (23) requires to manually pivot the pin (30) to enable the wire (35) to pass through the transverse notch (26) of the receiving cutout (23).

3. The palisade post according to any of claims 1 and 2, **characterised in that** the receiving cutout (23) is H shaped.

4. The palisade post according to any of the preceding claims, **characterised in that** the through port (29) is provided on the folding line (22) of the longitudinal boss (21).

5. The palisade post according to any of the preceding claims, **characterised in that** both longitudinal notches (24, 25) of the receiving cutout (23) are symmetrically disposed on either side of the folding line (22) of the longitudinal boss (21).

6. The palisade post according to any of the preceding claims, **characterised in that** it includes a plurality of receiving cutouts (23) on top of each of which a through port (29) is located, and **in that** at least one pin (30) is positioned in a through port (29).

7. The palisade post according to any of the preceding claims, **characterised in that** it is made of galvanised steel, the pins being also made of galvanised steel.

8. A palisade assembly, **characterised in that** it comprises two head posts (5, 6) and a plurality of intermediate posts (20), posts (5, 6, 20) on which at least one load-bearing or load-lifting wire (35) is mounted, and **in that** each intermediate post (20) is in accordance with any of claims 1 to 7.

9. The palisade assembly according to claim 8, **characterised in that** it includes a plurality of load-lifting wires (35).
